# EUROPÄISCHE PATENTSCHRIFT

(11) **EP 2 801 709 B1**
(45) Veröffentlichungstag und Bekanntmachung des Hinweises auf die Patenterteilung: **14.06.2017**
(21) Anmeldenummer: 14164458.3
(22) Anmeldetag: 11.04.2014
(51) Int. Cl.: F01N 3/021, F01N 13/18, F02M 26/12, F02M 26/15, F02M 26/30, F02M 26/35, F28F 19/01, F28D 21/00, F28F 9/02

(54) **Abgaskühler**
Exhaust gas cooler
Refroidisseur de gaz d'échappement

(30) Priorität: 08.05.2013 DE 102013208436
(43) Veröffentlichungstag der Anmeldung: 12.11.2014
(73) Patentinhaber: MAHLE Behr GmbH & Co. KG, 70469 Stuttgart (DE)
(72) Erfinder: Panic, Predrag, 71686 Remseck am Neckar (DE); Schüle, Matthias, 74321 Bietigheim-Bissingen (DE)
(74) Vertreter: BRP Renaud & Partner mbB Rechtsanwälte Patentanwälte Steuerberater

(56) Entgegenhaltungen:
- WO-A1-88/03049
- WO-A2-98/27323
- FR-A1- 2 925 351
- FR-A1- 2 930 278
- JP-A- S6 385 211
- US-A- 5 431 706
- US-A1- 2007 186 546

## Beschreibung

Die vorliegende Erfindung betrifft einen Abgaskühler für eine Verbrennungskraftmaschine, insbesondere für einen Verbrennungsmotor, mit den Merkmalen des Oberbegriffs des Anspruchs 1.

Bei der Verbrennung von Kraftstoff in Ottomotoren, Dieselmotoren, Gasturbinen, Heizkesseln und anderen Verbrennungskraftmaschinen entstehen Stickoxide, deren Freisetzung in die Atmosphäre die Umwelt belasten kann. Der Stand der Technik umfasst jedoch Verbrennungskraftmaschinen, die sich durch eine verminderte Schadstoffemission auszeichnen. Einige solche Verbrennungskraftmaschinen bedienen sich zu diesem Zweck einer als Abgasrückführung (AGR) bekannten Technik.

EP 2 273 095 A1 beschreibt ein derartiges Abgasrückführsystem. Dabei wird der für den Verbrennungsvorgang benötigten Luft ein gewisser Anteil an Abgas hinzugemischt, sodass ein Gasgemisch mit einer gegenüber Reinluft verminderten Sauerstoffkonzentration entsteht. Dieses Gasgemisch wird seinerseits im Brennraum der Verbrennungskraftmaschine in herkömmlicher Weise mit Kraftstoff vermengt, dessen Kohlenwasserstoff-Moleküle im Rahmen der Verbrennung mittels des verbleibenden Luftsauerstoffs oxidiert werden. Bei diesem Prozess erweist sich das Abgas als chemisch inert, sodass nicht jedes Kraftstoffmolekül auf ein als Reaktionspartner geeignetes Sauerstoffmolekül trifft. Die derart behinderte Oxidation von Kraftstoffmolekülen zieht eine insgesamt langsamere Verbrennung des Kraftstoffs nach sich, sodass Temperaturspitzen im Brennraum weitgehend vermieden werden. Da von der Verbrennungstemperatur wiederum die Reaktionsgeschwindigkeit der Stickoxidbildung abhängt, weist eine so konfigurierte Verbrennungskraftmaschine einen verringerten Schadstoffausstoß auf. Der beschriebene Zusammenhang ist in der Chemie als Zeldovich-Mechanismus oder thermischer NO-Mechanismus bekannt.

Die durch die Abgasrückführung erzielte Wirkung lässt sich in bekannter Weise verstärken, indem das verwendete Abgas, dessen originäre Temperatur bis zu 400 °C betragen kann, vor der Rückführung in den Brennraum abgekühlt wird. EP 2 194 351 B1 beschreibt in diesem Kontext einen Abgaskühler mit einer Mehrzahl von Abgas führenden, zumindest teilweise als Tauscherrohren ausgebildeten Strömungskanälen. Während das Abgas einen solchen Kühler in wechselnder Richtung durchströmt, wird es mittels eines geeigneten, mit den Kanälen in thermischem Austausch stehenden Fluids fortwährend gekühlt.

Handelt es sich bei der Verbrennungskraftmaschine um einen Kolbenmotor, insbesondere einen Dieselmotor, so umfasst dieser zum Zweck der Effizienz- oder Leistungssteigerung häufig zusätzlich einen Abgas-Turbolader (ATL), der seine Energie aus dem Restdruck des Abgases gewinnt. Das Abgas wird im Fall der sogenannten Niederdruck-Abgasrückführung der Verbrennungsluft des Motors dabei stromaufwärts des Abgas-Turboladers zugeführt. Bei dieser Anordnung können jedoch vom Abgasstrom mitgeführte Partikel den Abgas-Turbolader beschädigen. Aus diesem Grund wurde etwa in WO 2012/045673 vorgeschlagen, stromabwärts des Abgaskühlers einen geeigneten Partikelfilter vorzusehen. WO 2007/079138 offenbart einen solchen Filter, der auf einem Drahtgeflecht mit einem Porendurchmesser zwischen 2 µm und 15 µm basiert.

Problematisch ist dabei vor allem das Befestigungskonzept der bekannten Filter insbesondere im Rahmen einer Serienfertigung. Insofern können unvermeidbare Toleranzen des Filters sowie anderer Bauteile im Betrieb der Verbrennungskraftmaschine dazu führen, dass auf den Filter wirkende Vibrationen diesen aus seiner vorgesehenen Position lösen. Bei den bekannten Ansätzen wird der Filter daher zur Fixierung mit dem Abgaskühler zumeist mittels konventioneller Schweiß- oder Löttechniken verbunden. Die hierzu verwendeten Werkzeuge verursachen jedoch hohe Anschaffungs- und Betriebskosten, die sich negativ auf die Stückkosten entsprechend gefertigter Abgaskühler auswirken.

Ein gattungsgemäßer Abgaskühler ist aus der WO 88/03049 A1 bekannt. Er umfasst ein Gehäuse, einen am Gehäuse vorgesehenen Einlass zum Zuführen von Abgas und einen am Gehäuse vorgesehenen Auslass zum Abführen von Abgas, wobei der Einlass und der Auslass innerhalb des Gehäuses fluidisch verbunden sind. Das Gehäuse weist Befestigungselemente zum Befestigen eines Partikelfilters im Bereich des Auslasses auf. Ferner ist das Gehäuse zumindest bereichsweise in Form eines Diffusors ausgebildet, dessen Strömungsquerschnitt in Richtung des Auslasses im Wesentlichen zunimmt, wobei der Diffusor eine den Auslass zumindest bereichsweise umlaufende Auflagefläche zum Auflegen des Partikelfilters aufweist.

Aus der JP S63-85211 A ist ein Katalysator bekannt, der in einem Gehäuse einen topfförmigen, katalytisch aktiven Körper aufweist, der an seinem vom Boden abgewandten Ende einen radial abstehenden, umlaufenden Flansch aufweist. Im Gehäuse ist eine Ringstufe ausgebildet, auf die der Flansch axial aufgelegt ist. Mit einem Sicherungsring ist der Flansch mit der Ringstufe axial verspannt.

Die vorliegende Erfindung beschäftigt sich mit dem Problem, für einen Abgaskühler eine verbesserte Ausführungsform anzugeben, die sich insbesondere durch eine unkomplizierte Befestigungsmöglichkeit für einen Partikelfilter auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Gehäuse des Abgaskühlers selbst im Bereich des Auslasses mit Mitteln zum Befestigen eines Partikelfilters zu versehen. Zeit- und kostenintensive Fügeverbindungen wie Schweißen oder Löten, die eine starke Wärme- oder Druckeinwirkung auf den Partikelfilter oder den Abgaskühler zumindest entlang eines Flansches sowie den Einsatz geeigneter Zusatzwerkstoffe erfordern, werden bei diesem Ansatz entbehrlich.

Erfindungsgemäß ist der Abgaskühler zumindest bereichsweise in Form eines Diffusors ausgebildet, dessen Strömungsquerschnitt in Richtung des Auslasses, also stromabwärts, im Wesentlichen zunimmt. Auf diese Weise lässt sich die Strömung des den Kühler durchlaufenden Abgases verlangsamen. Mittels der so herbeigeführten Verzögerung wird ein Teil der kinetischen Energie des in den Kühler einströmenden Abgases gleichsam in Druckenergie gewandelt, um den Gasdruck zu erhöhen. Der Diffusor lässt sich dabei mit einer den Auslass zumindest bereichsweise umlaufenden Auflagefläche versehen, die ein Auflegen des Partikelfilters, insbesondere in einem Randbereich, auf den Diffusor zum Zweck der Befestigung erlaubt.

Erfindungsgemäß lässt sich die genannte Auflagefläche des Diffusors zur Anbringung axialer Befestigungselemente nutzen, die durch eine solche Anordnung unmittelbar mechanisch oder magnetisch auf den Partikelfilter wirken können, wenn dieser auf der Auflagefläche ruht.

Gemäß einer anderen vorteilhaften Ausführungsform weist das Gehäuse im Bereich des besagten Auslasses zudem eine Abschlussfläche auf, die aufgrund ihrer Gestaltung eine formschlüssige Verbindung der Abschlussfläche mit einer Bodengruppe erlaubt. Eine derart geformte Abschlussfläche ermöglicht es etwa, den Abgaskühler an einer selbsttragenden Karosserie zu befestigen. Im Rahmen des Automobilbaus kann ein in der genannten Weise montierter Abgaskühler mit einem von dem Fahrzeugaufbau getragenen Verbrennungsmotor gekoppelt und insbesondere in dessen Abgasrückführung integriert werden. Aufgrund des hergestellten Formschlusses wirkt die Schwerkraft im betriebsbereiten Zustand des Fahrzeugs dabei normal, also rechtwinklig auf die Abschlussfläche, die beispielsweise mittels bekannter stiftartiger Verbindungselemente wie Nieten oder Schrauben an der Bodengruppe fixiert werden kann.

Vorzugsweise ist das axiale Befestigungselement elastisch ausgeführt und auf der Auflagefläche dergestalt angeordnet, dass - im mit der Bodengruppe verbundenen Zustand des Abgaskühlers - das axiale Befestigungselement eine Vorspannung auf den Partikelfilter in Richtung der Bodengruppe auszuüben vermag, wenn dieser auf der Auflagefläche aufliegt. Etwaige Höhenunterschiede und andere Toleranzen von Diffusor und Bodengruppe in axialer Richtung werden durch die Elastizität des axialen Befestigungselements in dieser Anordnung potenziell kompensiert. Selbst im Fall von Vibrationen, wie sie im Fahrbetrieb des mit einem erfindungsgemäßen Abgaskühler versehenen Kraftfahrzeugs auftreten können, fixiert das Befestigungselement den Partikelfilter somit und verhindert dessen Loslösen vom Diffusor.

Des Weiteren weist der Diffusor erfindungsgemäß eine den Auslass zumindest bereichsweise umlaufende Zarge auf, die den Partikelfilter seitlich einfasst, wenn dieser auf der Auflagefläche ruht. Auf diese Weise besteht im montierten Zustand des Abgaskühlers nicht nur in dessen axialer Richtung ein Formschluss, der zur Fixation des Partikelfilters beiträgt; vielmehr ist der Partikelfilter auch in radialer Richtung gegen ein seitliches Verrutschen geschützt. Die beschriebene Funktion der Zarge lässt sich mittels eines weiteren, radialen Befestigungselements realisieren, welches auf einer der Auflagefläche benachbarten Innenfläche der Zarge angeordnet ist. Vorteilhaft ist dabei eine im Wesentlichen rechtwinklige Anordnung von Auflage- und Innenfläche, die eine gleichmäßige Krafteinwirkung auf beide Flächen gewährleistet.

Es empfiehlt sich in diesem Fall auch hinsichtlich des radialen Befestigungselements eine elastische Ausgestaltung, sodass das radiale Befestigungselement eine Vorspannung in zentrischer Richtung auf den auf die Auflagefläche aufgelegten Partikelfilter ausüben kann. Ein derartiges Verspannen des Partikelfilters innerhalb der Zarge gestattet eine flexible Handhabung des Abgaskühlers im Rahmen des Montagevorgangs, ohne ein Herausfallen des Filters aus seiner Einfassung zu riskieren.

Die besagte Haltewirkung lässt sich vorzugsweise mittels einer Vielzahl sowohl axialer als auch radialer Befestigungselemente erzielen, die den Auslass umlaufend auf der Auflage- und Innenfläche angeordnet sind. Vorteilhaft ist insbesondere eine alternierende Anordnung, bei der axiale und radiale Befestigungselemente entlang des von Zarge und Auflagefläche gebildeten Randes des Auslasses abwechselnd aufeinander folgen. Eine solche Konfiguration begünstigt eine Wechselwirkung gegenüber liegender und benachbarter Befestigungselemente, die im montierten Zustand des Abgaskühlers ein Verrutschen des Partikelfilters zuverlässig unterbindet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.
Figur 1 zeigt einen erfindungsgemäßen Abgaskühler in einer räumlichen Schnittdarstellung.
Figur 2 zeigt in einer weiteren Schnittdarstellung den an einer Bodengruppe befestigten Abgaskühler gemäß Figur 1 in Verbindung mit einem Partikelfilter.

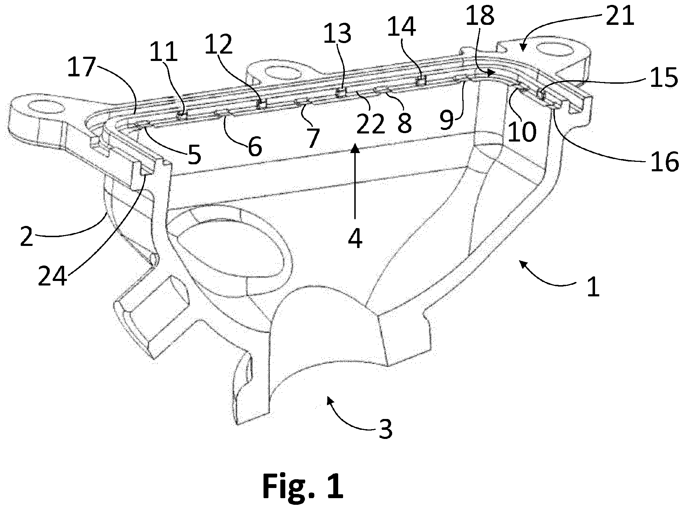

Entsprechend Fig. 1 umfasst ein erfindungsgemäßer Abgaskühler 1 ein weitgehend gasdichtes Gehäuse 2 mit einem Einlass 3, welcher die Zuführung eines von einer Verbrennungskraftmaschine ausgestoßenen Verbrennungsabgases erlaubt. Der Begriff "Abgas" ist in diesem Zusammenhang in einem weiten Wortsinn auszulegen und umfasst insbesondere jegliches Aerosol, das neben reinem Gas auch feste oder flüssige Schwebeteilchen enthält. In Betracht kommen etwa Dispersionen, die Kohlenstoffdioxid, Schwefeloxid, Salzsäure, Stickstoffoxide, Kohlenstoffmonoxid, Kohlenwasserstoffe, Kohlenstaub, Feinstaub, Ruß, Flugasche oder flüchtige organische Verbindungen (NMVOC) umfassen können.

Das Gehäuse 2 besteht zu diesem Zweck aus einem Werkstoff, der aufgrund seiner Materialeigenschaften zur Abdichtung derartigen Abgases gegen die Umgebungsluft geeignet ist. Die Druck- und Hitzebeständigkeit des Gehäuses 2 sind insbesondere bedingt durch die Strömungs- und Wärmeenergie, die im Rahmen eines vorangehenden Verbrennungsvorgangs erzeugt und mittels des Abgases in den Abgaskühler 1 transportiert wird. Das Gehäuse 2 weist ferner stromabwärts des Einlasses 3 einen Auslass 4 auf, durch welchen das in den Abgaskühler 1 eingeleitete Abgas nach dem Durchströmen des Abgaskühlers 1 aus dem Gehäuse 2 entweichen kann.

Zwischen dem Einlass 3 und dem Auslass 4 ist das Gehäuse 2 derart geformt, dass der Durchflussquerschnitt in Fließrichtung des den Abgaskühler 1 durchströmenden Abgases stetig zunimmt. Ein so beschaffenes Bauteil wird im Maschinen-, Elektrizitätswerks-, Ventilator-, Fahrzeug-, Flugzeug- und Schiffbau als Diffusor bezeichnet. Der Fachmann auf dem Gebiet der Strömungslehre vermag den Öffnungswinkel eines als Gehäuse 2 des erfindungsgemäßen Abgaskühlers 1 geeigneten Diffusors so zu berechnen, dass ein Ablösen der Abgasströmung von der Innenwand des Gehäuses 2 weitgehend vermieden wird, sodass Verwirbelungen des Abgases beim Durchströmen des Abgaskühlers 1 auf ein Mindestmaß beschränkt bleiben.

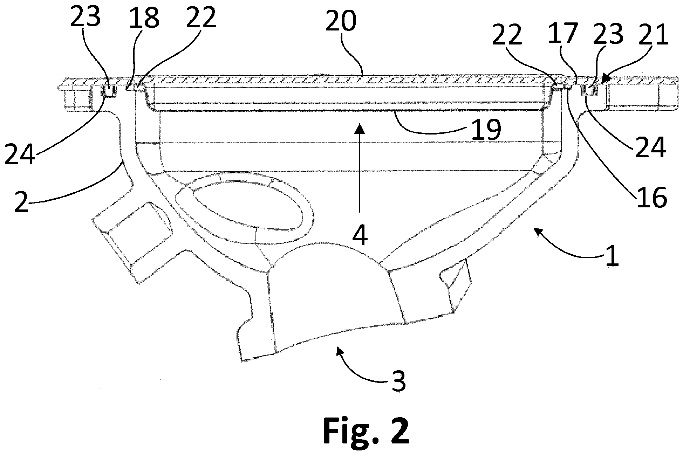

Im Bereich des Auslasses 4 weist das Gehäuse 2 dabei eine vorzugsweise vollständig umlaufende Auflagefläche 16 auf, die das Auflegen eines in Fig. 2 gezeigten Partikelfilters 19, insbesondere eines Dieselpartikelfilters (DPF) oder Rußpartikelfilters (RPF), mit einem vorzugsweise vollständig umlaufenden Rand 22, erlaubt. Als Partikelfilter ist im vorliegenden Kontext jede Einrichtung zu verstehen, die eine Reduzierung der Partikel im Strom des durch den Auslass 4 entweichenden Abgases erlaubt. Derartige Partikel können insbesondere Ruß oder Kohlenwasserstoffe umfassen, die die Verbrennungskraftmaschine aufgrund der Kraftstoffeigenschaften und des angewandten Verbrennungsverfahrens unverbrannt verlassen konnten. Der Partikelfilter 19 kann dabei regenerativ ausgelegt sein und eine Selbstreinigung etwa mittels kontrolliert ausgelöster Abbrandphasen erlauben. Ebenso kann es sich bei dem Partikelfilter 19 um ein weiteres, einem regenerativen Filter nachgelagertes und von diesem baulich getrenntes Filterglied handeln. Ein solches Filterglied mag etwa im Rahmen einer Niederdruck-Abgasrückführung dazu dienen, den stromabwärts angeordneten Abgas-Turbolader vor größeren Partikeln zu schützen, die sich bei der Reinigung des primären, regenerativen Dieselrußpartikelfilters aus selbigem lösen und die Funktionsfähigkeit des Abgas-Turboladers gefährden könnten.

Ebenfalls im Bereich des Auslasses 4 befindet sich eine im Wesentlichen plane Abschlussfläche 21 des Gehäuses 2. Wie Fig. 2 erkennen lässt, ermöglicht die Abschlussfläche 21 beim Anpressen an die planparallele Teilfläche einer Bodengruppe 20 (nur in Fig. 2 gezeigt) eine formschlüssige Verbindung des Abgaskühlers 1 mit der Bodengruppe 20. Mittels einer geeigneten Dichtung 23 (in Fig. 1 nicht gezeigt), die in eine, vorzugsweise vollständig umlaufende, Nut 24 einlegbar ist, und bekannter Verbindungstechniken lässt sich der so geformte Abgaskühler 1 weitgehend gasdicht mit einem Fahrzeugaufbau verbinden.

Um in dieser Konstellation den auf die Auflagefläche 16 aufgelegten Partikelfilter 19 zwischen dem Auslass 4 und der Bodengruppe 20 stabil zu lagern und gleichzeitig etwaige Fertigungstoleranzen der den Partikelfilter 19 umgebenden Bauteile auszugleichen, ist die Auflagefläche 16 mit einer Vielzahl axialer rippenförmiger Befestigungselemente 5-10 versehen. Wie Fig. 1 andeutet, umrahmen diese axialen Befestigungselemente 5-10 den Diffusor entlang des Auslasses 4 in einer näherungsweise äquidistanten Anordnung.

Darüber hinaus ist an den Diffusor im Bereich des Auslasses 4 eine diesen umlaufende Zarge 17 angeformt, die aufgrund ihres Profils - wie in Fig. 2 gezeigt - als Einfassung des auf der Auflagefläche 16 ruhenden Partikelfilters 19 dienen kann. Die in dieser Position mit dem Partikelfilter 19 in Kontakt stehende Innenfläche 18 schmiegt sich dabei etwa rechtwinklig an die von ihr eingeschlossene Auflagefläche 16 des Diffusors an und weist - jeweils ungefähr gleichmäßig beabstandet zwischen zwei benachbarten axialen Befestigungselementen 5, 6; 6, 7; 7, 8 - eine Vielzahl zusätzlicher, radialer Befestigungselemente 11-15 auf. Letztere sind ebenso wie ihre axialen Gegenstücke elastisch ausgeführt, üben durch ihre um einen Winkel von 90° verschwenkte Position jedoch eine Vorspannung aus, die etwa in Richtung des Mittelpunkts des Auslasses 4 wirkt. Der in der Stellung gemäß Fig. 2 befindliche Partikelfilter 19 wird somit durch diametral angeordnete Paare radialer Befestigungselemente 11-15 in eben dieser Position innerhalb der Zarge 17 kraftschlüssig festgehalten.

Die Zange 17 bildet gleichzeitig eine umlaufende Begrenzungswand der vorstehend genannten Nut 24 zur Aufnahme der Dichtung 23.

## Patentansprüche

1. Abgaskühler (1) für eine Verbrennungskraftmaschine, insbesondere einen Verbrennungsmotor, mit
- einem Gehäuse (2),
- zumindest einem am Gehäuse (2) vorgesehenen Einlass (3) zum Zuführen von Abgas,
- zumindest einem am Gehäuse (2) vorgesehenen Auslass (4) zum Abführen von Abgas, wobei der Einlass (3) und der Auslass (4) innerhalb des Gehäuses (2) fluidisch verbunden sind,
- wobei das Gehäuse (2) Befestigungselemente (5-15) zum Befestigen eines Partikelfilters (19) im Bereich des Auslasses (4) aufweist,
- wobei das Gehäuse (2) zumindest bereichsweise in Form eines Diffusors ausgebildet ist, dessen Strömungsquerschnitt in Richtung des Auslasses (4) im Wesentlichen zunimmt,
- wobei der Diffusor eine den Auslass (4) zumindest bereichsweise umlaufende Auflagefläche (16) zum Auflegen des Partikelfilters (19) aufweist,
**dadurch gekennzeichnet,**
- **dass** die Befestigungselemente (5-15) mehrere axiale Befestigungselemente (5-10) umfassen, die auf der Auflagefläche (16) angeordnet sind,
- **dass** der Diffusor ferner eine den Auslass (4) zumindest bereichsweise umlaufende Zarge (17) zum Einfassen des Partikelfilters (19) aufweist,
- **dass** die Befestigungselemente (5-15) mehrere radiale Befestigungselemente (11-15) umfassen, die auf einer der Auflagefläche (16) benachbarten Innenfläche (18) der Zarge (17) angeordnet sind.

2. Abgaskühler (1) nach Anspruch 1,
**dadurch gekennzeichnet,**
**dass** das Gehäuse (2) im Bereich des Auslasses (4) ferner eine Abschlussfläche (21) aufweist, so gestaltet, dass der Abgaskühler (1) entlang der Abschlussfläche (21) mit einer Bodengruppe (20) formschlüssig verbunden werden kann.

3. Abgaskühler (1) nach Anspruch 2,
**dadurch gekennzeichnet,**
**dass** die axialen Befestigungselemente (5-10) elastisch ausgeführt und so auf der Auflagefläche (16) angeordnet sind, dass die axialen Befestigungselemente (5-10) den auf die Auflagefläche (16) aufgelegten Partikelfilter (19) in Richtung der Bodengruppe (20) vorspannen, wenn der Abgaskühler (1) mit der Bodengruppe (20) verbunden wird.

4. Abgaskühler (1) nach einem der Ansprüche 1 bis 3,
**dadurch gekennzeichnet,**
**dass** die Auflagefläche (16) und die Innenfläche (18) im Wesentlichen rechtwinklig angeordnet sind.

5. Abgaskühler (1) nach Anspruch 4,
**dadurch gekennzeichnet,**
**dass** die radialen Befestigungselemente (11-15) elastisch ausgeführt und so auf der Innenfläche (18) angeordnet sind, dass die radialen Befestigungselemente (11-15) den auf die Auflagefläche (16) aufgelegten Partikelfilter (19) innerhalb der Zarge (17) verspannen.

6. Abgaskühler (1) nach Anspruch 5,
**dadurch gekennzeichnet,**
**dass** die axialen Befestigungselemente (5-10) und die radialen Befestigungselemente (11-15)den Auslass (4) in einer im Wesentlichen alternierenden Abfolge umlaufen.

## Claims

1. Exhaust gas cooler (1) for a combustion engine, in particular an internal combustion engine, with
- a housing (2),
- at least one inlet (3) provided on the housing (2) for the inflow of exhaust gas,
- at least one outlet (4) provided on the housing (2) for the discharge of exhaust gas, wherein the inlet (3) and the outlet (4) are fluidly connected within the housing (2),
- wherein the housing (2) comprises fastening elements (5-15) for fastening a particle filter (19) in the area of the outlet (4),
- wherein the housing (2) is formed at least in certain areas as a diffusor with a flow cross-sectional area that substantially increases in the direction of the outlet (4),
- wherein the diffusor comprises a contact surface (16) at least in certain areas extending around the outlet (4) for mounting the particle filter (19),
**characterized in that**
- the fastening elements (5-15) comprise multiple axial fastening elements (5-10) arranged on the contact surface (16),
- the diffusor further comprises a frame (17) at least in certain areas extending around the outlet (4) for framing the particle filter (19),
- the fastening elements (5-15) comprise multiple radial fastening elements (11-15) arranged on an inner surface (18) of the frame (17) adjacent to the contact surface (16).

2. Exhaust gas cooler (1) according to claim 1,
**characterized in that**
the housing (2) further comprises an end surface (21) in the area of the outlet (4) which is formed such that the exhaust gas cooler (1) can be connected in a form fitting manner along the end surface (21) to a floor assembly (20).

3. Exhaust gas cooler (1) according to claim 2,
**characterized in that**
the axial fastening elements (5-10) are elastic and are arranged on the contact surface (16) such that the axial fastening elements (5-10) preload the particle filter (19) disposed on the contact surface (16) in the direction of the floor assembly (20), when the exhaust gas cooler (1) is connected to the floor assembly (20).

4. Exhaust gas cooler (1) according to any of claims 1 to 3,
**characterized in that**
the contact surface (16) and the inner surface (18) are arranged substantially at right angles.

5. Exhaust gas cooler (1) according to claim 4,
**characterized in that**
the radial fastening elements (11-15) are elastic and are arranged on the inner surface (18) such that the radial fastening elements (11-15) preload the particle filter (19) disposed on the contact surface (16) within the frame (17).

6. Exhaust gas cooler (1) according to claim 5,
**characterized in that**
the axial fastening elements (5-10) and the radial fastening elements (11-15) surround the outlet (4) in a substantially alternating sequence.

## Revendications

1. Refroidisseur de gaz d'échappement (1) pour un moteur à combustion interne, en particulier un moteur à combustion, avec
- un carter (2),
- au moins une entrée (3) prévue au niveau du carter (2) pour l'alimentation en gaz d'échappement,
- au moins une sortie (4) prévue au niveau du carter (2) pour l'évacuation de gaz d'échappement, dans lequel l'entrée (3) et la sortie (4) sont reliées fluidiquement à l'intérieur du carter (2),
- dans lequel le carter (2) présente des éléments de fixation (5-15) pour la fixation d'un filtre à particules (19) dans la zone de la sortie (4),
- dans lequel le carter (2) est réalisé au moins par zone sous la forme d'un diffuseur, dont la section d'écoulement augmente sensiblement en direction de la sortie (4),
- dans lequel le diffuseur présente une surface d'appui (16) entourant au moins par zone la sortie (4) pour la pose du filtre à particules (19),
**caractérisé en ce**
- **que** les éléments de fixation (5-15) comprennent plusieurs éléments de fixation axiaux (5-10), qui sont agencés sur la surface d'appui (16),
- **que** le diffuseur présente en outre un châssis (17) entourant au moins par zone la sortie (4) pour l'encadrement du filtre à particules (19),
- **que** les éléments de fixation (5-15) comprennent plusieurs éléments de fixation radiaux (11-15), qui sont agencés sur une surface intérieure (18) du châssis (17) adjacente à la surface d'appui (16).

2. Refroidisseur de gaz d'échappement (1) selon la revendication 1,
**caractérisé en ce**
**que** le carter (2) présente en outre dans la zone de la sortie (4), une surface terminale (21) conçue de telle manière que le refroidisseur de gaz d'échappement (1) peut être relié par correspondance de forme le long de la surface terminale (21) à un groupe de fond (20).

3. Refroidisseur de gaz d'échappement (1) selon la revendication 2,
**caractérisé en ce**
**que** les éléments de fixation axiaux (5-10) sont réalisés élastiques et agencés sur la surface d'appui (16) de telle manière que les éléments de fixation axiaux (5-10) précontraignent le filtre à particules (19) posé sur la surface d'appui (16) en direction du groupe de fond (20), lorsque le refroidisseur de gaz d'échappement (1) est relié au groupe de fond (20).

4. Refroidisseur de gaz d'échappement (1) selon l'une quelconque des revendications 1 à 3,
**caractérisé en ce**
**que** la surface d'appui (16) et la surface intérieure (18) sont agencées sensiblement perpendiculairement.

5. Refroidisseur de gaz d'échappement (1) selon la revendication 4,
**caractérisé en ce**
**que** les éléments de fixation radiaux (11-15) sont réalisés élastiques et agencés sur la surface intérieure (18) de telle manière que les éléments de fixation radiaux (11-15) serrent le filtre à particules (19) posé sur la surface d'appui (16) à l'intérieur du châssis (17).

6. Refroidisseur de gaz d'échappement (1) selon la revendication 5,
**caractérisé en ce**
**que** les éléments de fixation axiaux (5-10) et les éléments de fixation radiaux (11-15) entourent la sortie (4) de manière sensiblement alternante.
